Europäisches Patentamt

European Patent Office

Office européen des brevets

(11) Veröffentlichungsnummer: **0 493 366 A2**

# EUROPÄISCHE PATENTANMELDUNG

(21) Anmeldenummer: **92103852.7**

(51) Int. Cl.5: **F24C 15/10, G05D 23/19**

(22) Anmeldetag: **30.01.87**

Diese Anmeldung is am 06 - 03 - 1992 als Teilanmeldung zu der unter INID-Kode 60 erwähnten Anmeldung eingereicht worden.

(30) Priorität: **31.01.86 CH 387/86**

(43) Veröffentlichungstag der Anmeldung:
**01.07.92 Patentblatt 92/27**

(60) Veröffentlichungsnummer der früheren Anmeldung nach Art. 76 EPÜ: **0 256 048**

(84) Benannte Vertragsstaaten:
**AT BE CH DE FR GB IT LI LU NL SE**

(71) Anmelder: **Electrolux AG**
**Badenerstrasse 587**
**CH-8048 Zürich(CH)**

(72) Erfinder: **Keller, Edwin**
**Halden 24**
**CH-8604 Volketswil(CH)**
Erfinder: **Tischhauser, Hans**
**Antonigasse 20**
**CH-5620 Bremgarten(CH)**

(74) Vertreter: **Troesch Scheidegger Werner AG**
**Patentanwälte, Siewerdtstrasse 95, Postfach**
**CH-8050 Zürich(CH)**

(54) **Verfahren zur Steuerung der Heizleistung an einem Kochherd-Heizelement und Steuerung für die mindestens einem Kochherd-Heizelement zuzuführende Leistung.**

(57) Um die, einem Heizelement (1) eines Kochherdes zugeführte, quasi momentane Heizleistung einstellen zu können und somit zu umgehen, dass das Heizelement praktisch im Zeitpunktbetrieb voll leistungsbeaufschlagt, dann von der Leistungszufuhr abgeschaltet wird, wird vorgeschlagen, mit einem Vorgabeelement (11) eine Zeitgebereinheit (21) anzusteuern, deren Ausgangsimpulsbreiten ($A_{21}$) steuerbar sind, um damit einen Schalter (19) zur Leistungsaufschaltung anzusteuern, entweder im Sinne einer Phasenanschnittsteuerung der zugeführten Wechselspannung vom Netz (5) oder zur Bestimmung der Längen aufgeschalteter Wechselspannungs- bzw. -strompakete im Verhältnis zur Abschaltzeitdauer.

FIG. 3

Die vorliegende Erfindung betrifft ein Verfahren zur Steuerung der Heizleistung an mindestens einem Heizelement eines Kochherdes, deren erwünschter Wert mittels eines Vorgabeelementes eingestellt wird sowie eine Steuerung für die mindestens einem Kochherd-Heizelement zuzuführende Leistung.

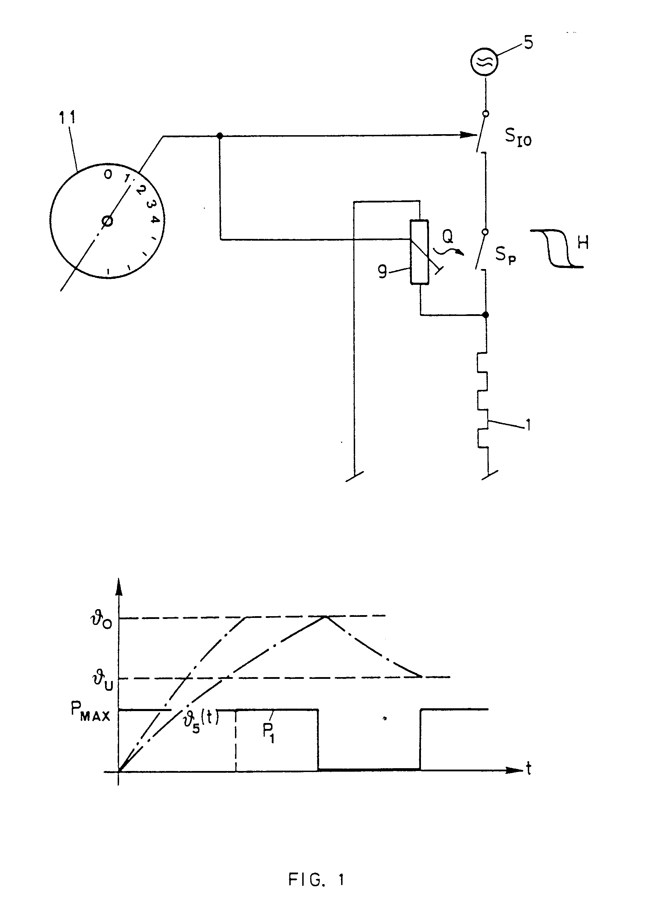

In Fig. 1 ist prinzipiell dargestellt, wie herkömmlicherweise die Heizleistung an ein Kochherd-Heizelement gesteuert wird. Ueber ein Vorgabeelement, üblicherweise einen Drehknopf 11 mit zehn Einstellstufen, wird ein EIN/AUS-Schalter $S_{IO}$ zwischen dem Netz 5 und einem Heizelement 1 des Kochherdes geschlossen. In Serie zwischen Netz und Heizelement liegt ein Leistungssteuerschalter $S_P$, wie ein Bimetallschalter mit Hysterese H, der thermisch, wie bei Q angedeutet, mit einem Beheizungselement 9 gekoppelt ist, beispielsweise einem Widerstand, der parallel zum Heizelement 1 liegt. Grundsätzlich wird entsprechend den am Knopf 11 eingeschalteten Stufen die Ansprechzeit des Schalters $S_P$ eingestellt.

Der Schalter $S_P$ ist vorerst geschlossen. Wird nun der Schalter $S_{IO}$ eingeschaltet, so wird das Heizelement 1 mit voller Leistung $P_{MAX}$ beaufschlagt. Die Temperatur am Beheizungselement 9 $\vartheta_9$ steigt, bis sie den oberen Schwellwert $\vartheta_O$, entsprechend der Hysterese H erreicht. Daraufhin wird der Schalter $S_P$ geöffnet und die Leistung am Heizelement 1 abgeschaltet. Nun fällt die Temperatur $\vartheta_9$ des Beheizungselementes 9 wiederum ab. Erreicht sie den unteren Schwellwert $\vartheta_U$, so wird durch Schliessen des Schalters $S_P$ wiederum volle Leistung auf das Heizelement 1 geschaltet. Durch die Stufenschaltung des Knopfes 11 wird nun beispielsweise der Widerstandswert des Beheizungselementes 9 geändert. Wird er verkleinert, so erhöht sich seine Heizleistung, der Schalter $S_P$ springt rascher an und unterbricht die Leistungszufuhr an das Heizelement 1, wodurch bei in etwa gleichbleibendem Abkühlverhalten des Beheizungselementes 9, die Zeitspanne, während welcher die volle Leistung $P_{MAX}$ dem Heizelement 1 aufgeschaltet ist, verkürzt wird. Auf diese Art und Weise wird das Verhältnis der Zeiten, während welchen dem Heizelement 1 volle Leistung aufgeschaltet ist, bzw. keine Leistung aufgeschaltet ist, verändert. Dieses Vorgehen ist in verschiedener Hinsicht nachteilig:

Exemplarstreuungen, Einfluss der Umgebungstemperatur und Alterung der Elemente ergeben eine nur äusserst ungenaue Leistungsabstufung der über die Zeit gemittelten, dem Heizelement 1 aufgeschalteten Leistung. Im weiteren führt das Auf- und Abschalten der vollen Leistung, ohne Entstörung, zu relativ starken Netzstörungen und eine Einstellung kleiner Leistungen ist problematisch. In Zeitabschnitten, in welchen dem Heizelement 1 volle Leistung aufgeschaltet wird, ergibt sich ein starkes Temperaturgefälle zwischen Heizelement 1, Kochgeschirr und Kochgut, entlang der Vertikalachse zum Kochgeschirr, womit die unterste Schicht des Kochgutes anbrennen kann, während die oberen noch kaum warm sind.

Es ist Aufgabe der vorliegenden Erfindung, diese Nachteile zu beheben.

Dies wird bei einem Verfahren eingangs genannter Art dadurch erreicht, dass man mittels des Vorgabeelementes die dem Heizelement zugeführte, quasi momentane Leistung auf vorgegebene Werte stellt.

Unter quasi momentaner Leistung wird im folgenden eine Leistung verstanden, die sich aus der Betrachtung von Zeitspannen ergibt, die kleiner oder gleich einer halben Netz-Wechselsignalperiode sind.

Während nach dem bekannten Heizverfahren die Leistung entweder voll ein- oder abgeschaltet wird, wird nun gemäss dem erfindungsgemässen Verfahren praktisch die momentane aufgeschaltete Leistung variiert.

Die Abstufung der Heizleistung wird bei einer ersten Ausführungsform des genannten Verfahrens dadurch erreicht, dass man an einem elektrischen Wechselsignal zum Erbringen der Heizleistung in Funktion der Einstellung des Vorgabelementes einen Phasenanschnittwinkel verändert.

Auf diese Art und Weise wird die durch Phasenanschnittsteuerung des dem Heizelement zugeführten Wechselstromsignals die momentane Heizleistung praktisch kontinuierlich einstellbar. Diese Ausführungsvariante hat aber den Nachteil, dass in bekannter Art und Weise Phasenanschnittsteuerungen zu unerwünschten Netzstörungen führen, womit eine Entstörung, wie auch bei dem anhand von Fig. 1 dargestellten, bekannten Verfahren notwendig bleibt. Dieser Nachteil wird nun dadurch eliminiert, dass man an einem elektrischen Wechselsignal zum Erbringen der Heizleistung Wechselsignalpakete erzeugt und deren Tastverhältnis ansteuert. Es werden somit nach Massgabe der Einstellung am Vorgabeelement Wechselstrompakete auf das Heizelement aufgeschaltet, mit variabler Anzahl Halbwellen. Die Breite dieser Pakete, bezogen auf die Zwischenzeitspanne zwischen den Paketen, bestimmt die wiederum praktisch kontinuierlich einstellbare Heizleistung.

Es wird somit dem Heizelement durch Schliessen seines Stromkreises auf das Netz eine Anzahl Netzhalbwellen aufgeschaltet, dann wird das Heizelement vom Netz abgetrennt, wobei die Leistungsverstellung durch Verstellung des Verhältnisses zwischen Zeiten, an welchen das Heizelement vom Netz abgetrennt ist, und Zeiten, an welchen das Netz dem Heizelement aufgeschaltet ist, erfolgt.

Dabei wird vorzugsweise, zur Minimalisierung der erwähnten Störungen, so vorgegangen, dass man die Pakete zeitlich von Nulldurchgang zu Nulldurchgang des Wechselstromes in ihrer Breite steuert.

Dadurch, dass man das Vorgabeelement manuell und/oder nach einem Zeitsteuerprogramm einschaltet, wird ermöglicht, einen Kochvorgang zu planen und die Zeit einzugeben, wann damit begonnen werden soll.

Bei einer weiteren Ausführungsvariante des Verfahrens wird vorgeschlagen, dass man die Variation der Heizleistung nach einem Programm in der Zeit kontinuierlich oder in Stufen ansteuert, wie nach Massgabe von kochgutspezifischen Programmen. Damit wird ermöglicht, dank des obgenannten Steuerverfahrens, dass man die Funktion der dem Heizelement zugeführten Leistung in der Zeit erst vorgibt und nach Beginn des Kochvorganges das Heizelement auch nach dieser Funktion steuert.

Insbesondere wird damit die Möglichkeit eröffnet, im Sinne einer Anstossautomatik bzw. einer Ankochautomatik, bei Aufschalten der Heizleistung bei Beginn eines Kochvorganges eine Ueberleistung vorzugeben, um eine erwünschte Heizelement-Temperatur möglichst rasch zu erreichen.

Dabei kann die Programmeingabe mittels manueller Codeeingabe und/oder mittels Einlesen von Datenträgern an Ort oder mittels einer drahtlosen Uebermittlung vorgenommen werden.

Bei einer weiteren Ausführungsvariante, bei der man bei einem spezifischen Kochvorgang das Vorgabeelement manuell über der Zeit verschieden einstellt, wird ein als optimal befundener Leistungs/Zeitablauf abgespeichert, z.B. auf einer Magnetkarte, zur nachmaligen Wiederbenutzung.

Dadurch, dass man im weiteren mindestens zwei Heizelemente in gegenseitiger Abhängigkeit ansteuert, wird erreicht, dass bespielsweise zwei Kochplatten für ein grosses Kochgeschirr synchron angesteuert werden können, oder dass bei Vorliegen verschiedener Kochgüter in verschiedenen Kochgeschirren die zeitliche und leistungsmässige Ansteuerung der zugeordneten Heizelemente so erfolgen kann, dass die Kochgüter beide zu abgestimmten Zeiten fertiggestellt sind, wie beispielsweise für gleichzeitiges Anrichten.

Dies ergibt auch die Möglichkeit, dass man bei Steuerung der Heizleistung an mehr als einem Heizelement die Steuerung selbsttätig unter Vermeidung von netzseitigen Leistungsspitzen vornimmt.

Dies kann dadurch erfolgen, dass die vom Netz aufgenommene Leistung überwacht wird und beispielsweise die vorgenannten Pakete für mehrere Heizelemente gestaffelt den zugeordneten Elementen aufgeschaltet werden.

In Anbetracht der Tatsache, dass unterschiedliche Kochgeschirre und unterschiedliche Kochgüter auch unterschiedliche Wärmeleitungen und Wärmeabsorptionseigenschaften aufweisen, kann mit der gleichen angesteuerten Heizleistung bei unterschiedlichen Geschirren bzw. -Kochgütern ein völlig unterschiedliches Resultat des Kochvorganges erzielt werden. So kann beispielsweise ein Kochgut mit kleiner Wärmeleitfähigkeit bei einer eingestellten Heizleistung bereits anbrennen, somit an der Bodenpartie des Kochgeschirrs thermisch isolierend wirken, was den Anbrennprozess noch weiter erhöht, während ein anderes Kochgut mit guter Wärmeleitfähigkeit bei der gleichen eingestellten Heizleistung relativ gleichmässig über sein Volumen erwärmt wird. Diese Unsicherheit bezüglich des Kochgut-Temperaturzustandes wird dadurch eliminiert, dass man mindestens eine Temperatur an der Strecke zwischen Heizelement und Kochgut inkl. als Regelgrösse misst und die Heizleistungssteuerung als Stellglied in einer Regelung einsetzt.

Dabei kann beispielsweise an zwei Stellen ausserhalb des Kochgeschirrs, an seiner Wandung gemessen werden, und die gemessene Temperaturdifferenz als Kriterium für den Temperaturzustand des Kochgutes als Regelgrösse eingesetzt werden.

Um nun an Orten, an welchen das Netz grossen Schwankungen unterworfen ist oder gar häufig unterbrochen wird, die Unsicherheit darüber, ob eine angesteuerte Heizleistung überhaupt erbracht wurde, zu eliminieren, wird weiter vorgeschlagen, dass man einen Ausfall des elektrischen Netzes und/oder bereits ein Abfallen unter einen vorgegebenen Wert anzeigt.

Ist eine Regelung vorgesehen, so wird dadurch, dass man die Schrittantwort auf einen SOLL-Wertschritt mindestens einer von einer Kochgut-SOLL-Temperatur abhängigen Führungsgrösse optimiert, eine optimale Ankoch- bzw. Anstossautomatik erreicht.

Eine Steuerung für die einem Kochherd-Heizelement zuzuführende Leistung, wobei ein Vorgabeelement für die gewinschte Leistung vorgesehen ist, zeichnet sich nun dadurch aus, dass eine Einstelleinheit für die quasi momentane Leistung zwischen Netz und Heizelement vorgesehen ist, die eingangsseitig vom Vorgabeelement angesteuert wird.

Die Erfindung wird nun anschliessend beispielsweise anhand von Figuren erläutert.

Es zeigen:

Fig. 2    eine prinzipielle Darstellung des erfindungsgemässen Verfahrens bzw. der erfindungsgemässen Steuerung, im Unterschied zu dem anhand von Fig. 1 dargestellten bekannten Verfahren,

Fig. 3    prinzipiell eine bevorzugte Ausführungsvariante der Anordnung gemäss Fig. 2,

Fig. 4    in einem Strom/Zeit-Diagramm, eine erste Variante, wie die Leistung an der Anordnung gemäss Fig. 3 eingestellt wird,

Fig. 5    eine Darstellung analog zu Fig. 4 für eine zweite, bevorzugte Variante,

Fig. 6    schematisch eine Steuerung zur Ausführung der Steuervariante, wie sie anhand von Fig. 4 erläutert wurde,

Fig. 7    schematisch eine Steueranordnung zur Ausführung der Steuerung, wie sie anhand von Fig. 5 dargestellt ist,

Fig. 8    schematisch eine Ausführungsvariante der Steuerung, wie sie prinzipiell in den Fig. 6, vorzugsweise aber 7, dargestellt ist, mit weiteren Optionen, unter Einsatz eines Rechners, wie eines Mikroprozessors, bzw. Mikrocomputers.

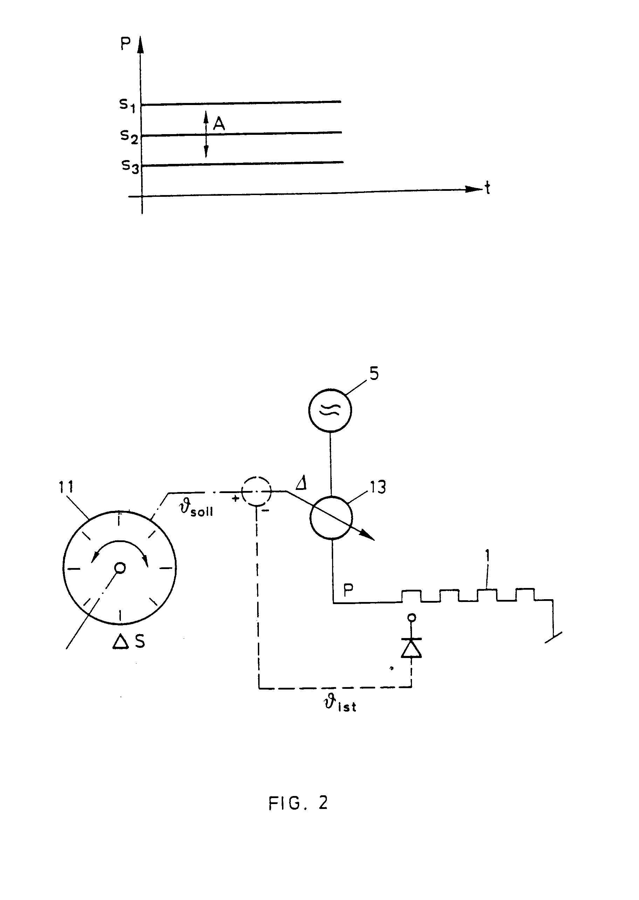

In Fig. 2 ist zum Aufzeigen des prinzipiellen Unterschiedes des erfindungsgemässen Verfahrens bzw. der erfindungsgemässen Steuerung zu Bekanntem dargestellt, wie der Einstellknopf 11 die vom Netz 5 an das Heizelement 1 übertragene Leistung P in Funktion der am Einstellknopf 11 eingestellten Position ansteuert. Zwischen dem Netz 5 und dem Heizelement 1 ist hierzu eine Leistungseinstelleinheit 13 vorgesehen, die, je nach Feinheit der am Einstellknopf 11 einstellbaren Leistungswerte, kontinuierlich oder in Stufen die Leistung P am Heizelement 1 steuert. Gestrichelt ist bereits in dieser Darstellung angedeutet, dass im Bereich des Heizelementes/Kochgeschirrs (nicht dargestellt) ein Thermofühler 15 vorgesehen sein kann, dessen Ausgangssignal als Temperatur-ISTWert einer Vergleichseinheit 17 zugeführt wird, an die ein mittels des Einstellknopfes 11 einstellbarer Temperatur-SOLL-Wert $\vartheta_{SOLL}$ zugeführt wird, so dass die Leistungs-Einstelleinheit 13 nach Massgabe einer Temperaturregeldifferenz $\Delta$, als Stellglied wirkend, die Temperatur $\vartheta_{IST}$ auf die Temperatur $\vartheta_{SOLL}$ regelt.

Wie oben in Fig. 2 dargestellt, wird in Stufen, entsprechend den Einstellungen s am Einstellknopf 11 die Leistung P, die dem Heizelement 1 zugeführt wird, eingestellt, oder, wie mit Pfeil A angedeutet, kontinuierlich einstellbar, wobei Einstellungsänderungen praktisch momentan übernommen werden.

Obwohl es durchaus möglich wäre, über Teiler, die dem Heizelement 1 zugeführte momentane Leistung einzustellen, ist dies selbstverständlich aus Verlustgründen nicht unbedingt optimal.

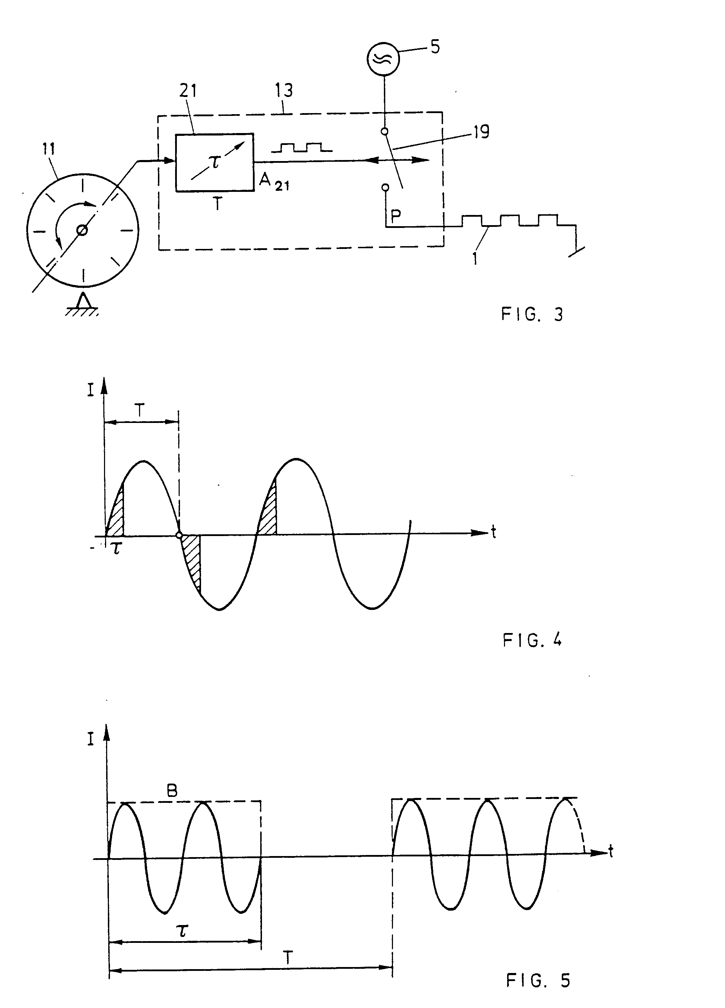

In Fig. 3 ist wiederum prinzipiell ein bevorzugtes Vorgehen zur Einstellung der momentanen Leistung dargestellt. Danach umfasst die Leistungs-Einstelleinheit 13 einen elektronischen Schalter 19, wie einen Leistungs-Halbleiter, der vom Ausgang $A_{21}$ einer Zeitgebereinheit 21 angesteuert wird. Ein am Ausgang $A_{21}$ der Zeitgebereinheit 21 erscheinender Impulszug steuert dabei grundsätzlich das Verhältnis zwischen Zeiten, in welchen der Schalter 19 geschlossen ist, und Zeiten, in welchen der Schalter 19 geöffnet ist, an. Das Verhältnis dieser Zeiten bzw. deren Aenderung, ergibt die erwünschte Einstellung der dem Heizelement 1 zugeführten Leistung P.

In Fig. 3 ist mit T die Impuls-Repetitionsperiode des am Ausgang $A_{21}$ erscheinenden Impulszuges dargestellt mit der Variablen $\tau$, die Impulsbreite jedes den Schalter 19 schliessenden Impulses. Dabei wird das Verhältnis

$$\frac{\tau}{\tau - \tau}$$

nach Massgabe der Einstellung des Knopfes 11 verändert.

Dieses Prinzip kann nun, wie anhand der Fig. 4 und 5 dargestellt, auf verschiedene Arten realisiert werden.

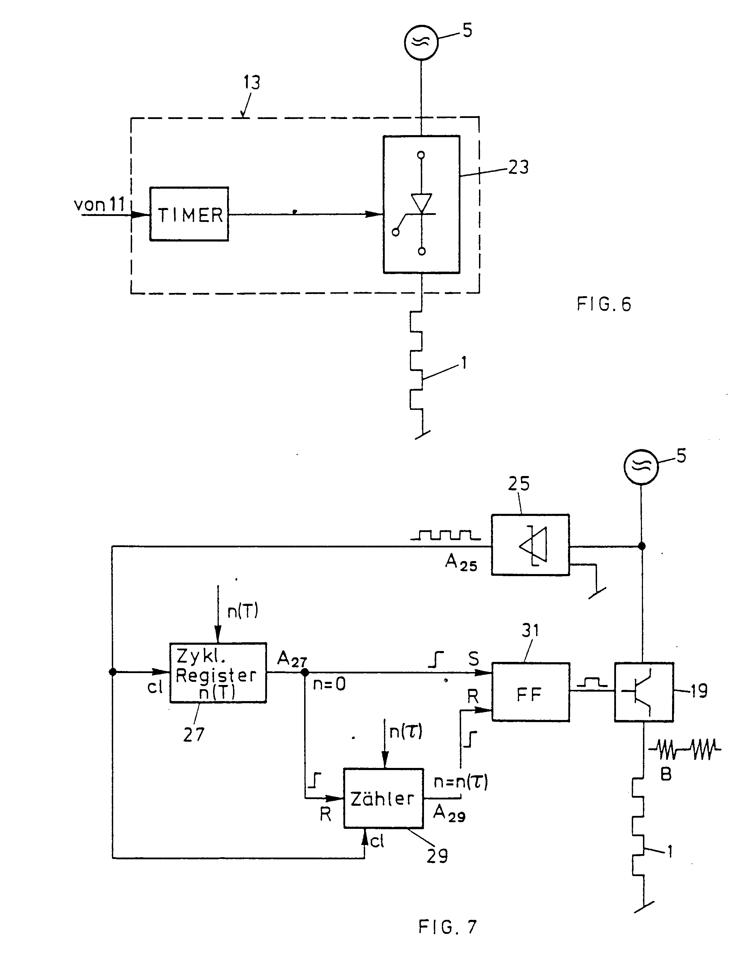

Gemäss Fig. 4 entspricht die Impulsbreite $\tau$ dem Anschnittwinkel des dem Heizelement 1 zugeführten Wechselstromes, die Zeit T gemäss Fig. 3 der Wechselstromhalbperiode. Damit wird durch den Einstellknopf 11 der Phasenanschnittwinkel entsprechend $\tau$ an einer an der Leistungs-Einstelleinheit 13 vorgesehenen Phasenanschnittsteuerung 23 gemäss Fig. 6 angesteuert.

Diese Ansteuerungsvariante hat in bekannter Art und Weise den Nachteil, dass sie das elektrische Netz relativ stark stört, in Abhängigkeit des eingestellten Phasenanschnittwinkels, was durch Signalauslegung gemäss Fig. 5 vermieden wird.

In Fig. 5 ist mit Bezug auf die bereits beschriebene Fig. 3 ein weiteres Vorgehen dargestellt. Mit der variablen Zeitspanne $\tau$ gemäss Fig. 3 wird die Breite eines Wechselsignalpaketes B verändert. Während dieser Zeitspanne $\tau$ wird das Wechselsignal vom Netz 5 auf das Heizelement 1 durchgeschaltet. Danach wird der Schalter 19 gemäss Fig. 3 geöffnet, während einer Zeitspanne T-$\tau$, wobei T, wie in Fig. 5 dargestellt ist, die Paketrepetitionsperiode darstellt. Durch Einstellung des Verhältnisses $\tau$ zu T-$\tau$ wird hier wiederum die quasi momentane Leistung, die dem Heizelement 1 zugeführt wird, eingestellt, praktisch kontinuierlich, indem die Paketbreite B in ganzen Halbperioden verändert werden kann. Bevorzugterweise wird jedes Paket B bei einem Nulldurchgang des Stromes gestartet und endet wiederum bei einem Nulldurchgang des Stromes. Damit werden die entstehenden Störungen minimalisiert.

Es wird klar, dass bei erfindungsgemässen Vorgehen praktisch die Momentan-Leistung verstellbar wird.

Eine Realisationsvariante der anhand von Fig. 5 prinzipiell dargestellten Steuerung ist in Fig. 7 gezeigt. Die Spannung des Netzes 5 wird nebst dem elektronischen Schalter 19, welcher mit seinem gesteuerten Pfad das Netz 5 auf das Heizelement 1 schaltet, einem Impulsformer 25 zugeschaltet, grundsätzlich in der Funktion eines Komparators bzw. Null-Durchgangsdetektors, der das ihm zugeführte Wechselsignal in einen gleichfrequenten Impulszug an seinem Ausgang $A_{25}$ wandelt. Ein zyklisch betriebenes Register 27 wird durch den Impulszug am Ausgang $A_{25}$ getaktet. Seine Zykluslänge n(T) wird extern eingegeben, so dass das Register 27 von Null beginnend, bis zum Wert n(T) aufinkrementiert, rückgesetzt wird auf Null und wiederum aufinkrementiert. Die eingegebene Zykluslänge n(T) entspricht der anhand von Fig. 3 erläuterten Zeitspanne T.

Der Ausgang $A_{25}$ wird im weiteren dem Takteingang eines Zählers 29 zugeführt. Der Zähler 29 wird durch den Ausgang $A_{27}$ des zyklischen Registers 27 dann auf Null gesetzt, wenn am Register 27 der Wert n = O erscheint. Der Ausgang $A_{29}$ des Zählers 29 wird dann aktiviert, wenn er eine Anzahl der Impulse vom Ausgang $A_{25}$ gezählt hat, die einem extern eingegebenen Wert $n(\tau)$ entspricht. Durch den Ausgang $A_{27}$ des zyklischen Registers 27 wird ein bistabiles Element, wie ein Flip-Flop 31, gesetzt, durch den Ausgang $A_{29}$ des Zählers 29 rückgesetzt. In der Zeitspanne, in welcher das Flip-Flop 31 gesetzt ist, wird der Halbleiterschalter 19 leitend gesteuert, so dass dem Heizelement 1 die anhand von Fig. 5 dargestellten Pakete B zugeschaltet werden.

Bei Beginn der Zeitspanne T wird das Flip-Flop 31 gesetzt, zugleich der Zähler 29 rückgesetzt und beginnt nun während der Zeit $\tau$ die ihm vom Ausgang $A_{25}$ zugeführten Impulse zu zählen. Während dieser Zeit ist der Schalter 19 leitend geschaltet und ein Paket B wird dem Heizelement 1 zugeführt. Nach Verstreichen der Zeit $\tau$, entsprechend einer vorgegebenen Impulszahl am Ausgang $A_{25}$ wird das Flip-Flop 31 rückgesetzt, der Schalter 19 sperrend geschaltet. Erst wenn der Zyklus des Registers 27 abgelaufen ist, entsprechend der Zeit T, wird der Schalter 19 wieder leitend geschaltet, während der am Zähler 29 eingegebenen Zeitspanne $\tau$.

Es versteht sich nun von selbst, dass die anhand von Fig. 7 prinzipiell dargestellte digitale Technik sich ausgezeichnet für den Einsatz eines Rechners, d.h. eines Mikroprozessors, eignet. Dadurch werden aber zusätzliche Möglichkeiten für die Steuerung eröffnet.

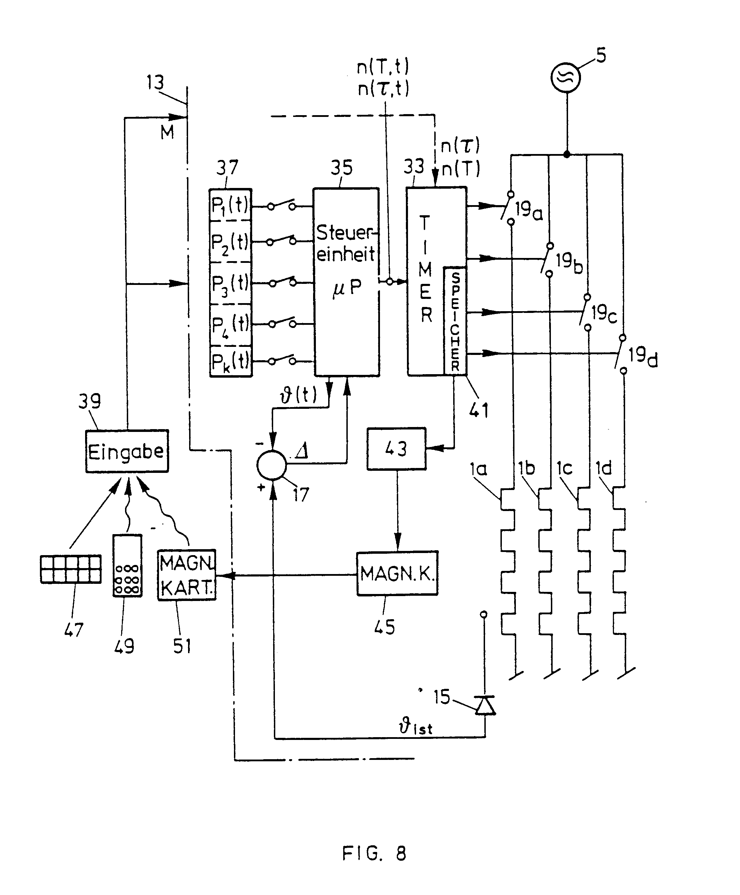

Die wesentlichsten seien anhand von Fig. 8 erläutert. Das Netz 5 wird über entsprechende elektronische Schalter $19_a$ bis $19_d$ auf beispielsweise vier dargestellte Heizelemente entsprechend vier Kochherdplatten 1a bis 1d geschaltet. Die Schalter 19 werden durch eine Zeitgebereinheit 33 angesteuert, für jeden Schalter 19 beispielsweise ausgebildet, wie anhand von Fig. 7 dargestellt wurde. Die anhand von Fig. 7 dargestellt eingegebenen Werte, entsprechend T bzw. $\tau$, werden der Zeitgebereinheit 33 von einer Steuereinheit 35, basierend auf einem Mikroprozessor zugespiesen, und zwar in Funktion der Zeit T. Damit steuert die Steuereinheit 35 die Leistungszufuhr an die Heizelemente 1, nach noch zu beschreibenden Kriterien, in Funktion der Zeit.

In einem Programmspeicher 37 sind mehrere Programme $P_1$, $P_2$ ... gespeichert. Sie entsprechen den an den Heizelementen 1 anzusteuernden Leistungszeitkurve, z.B. bei unterschiedlichen Kochgeschirren, und/oder Kochgütern und legen je fest, wie die Steuereinheit 35 die Zeitgebereinheit 33 in Funktion der Zeit ansteuern soll. Die Anwahl, welches der Programme $P_1$ ... $P_k$ bzw. Steuerdaten-Sequenzen zur Steuerung aktiviert werden soll, erfolgt über eine Eingabe 39. Falls der Anwender nicht eines der abgespeicherten Zeitsteuerprogramme $P_1$ ... $P_k$ verwenden will, gibt er über die Eingabe 39, wie mit dem Signalpfad M angedeutet, die anzusteuernden Leistungswerte für die Heizelemente 1, entsprechend $n(\tau)$ bzw. n(T) entsprechend Fig. 7, der Zeitgebereinheit 33 direkt ein.

An der Zeitgebereinheit 33 ist dabei ein Zwischenspeicher 41 vorgesehen, in welchem ab Beginn eines Kochvorganges bis zu seinem Ende die vollzogene Leistungssteuerung heizelementspezifisch in Funktion der Zeit abgespeichert wird. Hat nun der Anwender durch manuelle Betätigung entsprechend dem Signalpfad M, einen Kochvorgang abgeschlossen, der ihn befriedigt, so lädt er die abgespeicherte Leistungs/Zeit-Charakteristik in einen weiteren Programmspeicher 43, der Teil des Programmspeichers 37 sein kann, oder dessen Inhalt auf ein Speichermedium, wie eine Magnetkarte 45, ausgegeben werden kann. Auch hier kann mit dem Thermofühler 15 im Bereich des Heizelementes/Kochgeschirrs die dortige IST-Temperatur gemessen werden. Diese IST-Temperatur wird im Sinne einer Regelung der Vergleichereinheit 17 zugeführt. Der Temperatur-SOLL-Wert wird an der Steuereinheit 35 ermittelt, entsprechend dem im Speicher 37 aktivierten Programm. Die Differenz zwischen momentaner SOLL- und momentaner IST-Temperatur wirkt im regelnden Sinne auf die Steuereinheit 35, die Zeitgebereinheit 33 und damit die Leistungsstellung über die Schalter 19.

Bei der Eingabe 39 handelt es sich beispielsweise um ein Tastenfeld 47, wie mit Folientasten und/oder, um eine Fernsteuereingabe 49, wie auf Ultraschall- oder Infrarotbasis und/oder um eine Magnetkarten-Eingabevorrichtung 51 zum Eingeben und Lesen von Magnetkarten 45. Selbstverständlich können verschiedene Digitalanzeigen vorgesehen sein, über die momentanen Temperaturen, die aktivierten Programme etc. und insbesondere auch Anzeigen, die signalisieren, ob das Netz 5 allenfalls ausgefallen ist oder unter einen vorgegebenen Spannungswert gesunken ist. Die dargestellte Steuerung ermöglicht eine lokale Trennung der einzelnen Systemkomponenten. So kann ein Tastenfeld 47 für die manuelle Ansteuerung und Codierung der Steuerung, entfernt vom Kochherd, beispielsweise flach an einer Wand montiert werden, für Kinder nur schwer zugänglich. Bei dem bekannterweise geringen Platzbedarf für derartige µP-Steuerungen lässt sich dabei auf einem brettartigen Gebilde mit dem Tastenfeld 47 die ganze Steuerung entfernt vom eigentlichen Kochherd an einer Wand montieren und beispielsweise nur die elektronischen Leistungsschalter lokal den Heizelementen 1 zuordnen. Es brauchen dann nur die Steuerleitungen zur Ansteuerung dieser Schalter 19 vom lokal entfernten Steuerungs-Panel dem eigentlichen Kochherd zugeführt werden, der nun auch auf das Volumen der Speisung und der Heizelemente reduziert wird.

Wie in Fig. 8 ohne weiteres ersichtlich, wird es auch möglich, den Betrieb der einzelnen Heizelemente 1 zu koppeln, d.h. beispielsweise die Elemente 1a und 1b synchron anzusteuern. Die Steuereinheit 35 erlaubt auch ohne weiteres einen Vergleich je für Heizelemente 1 momentan aktivierter Programme $P_1$ ... $P_k$ aus dem Programmspeicher 37 bzw. von einer Magnetkarte 45, um die Heizelemente durch entsprechende Zeitstaffelung der Programmausführung so anzusteuern, dass die gewählten Programme, beispielsweise gleichzeitig beendet sind, somit Kochgüter auf verschiedenen Heizelementen, beispielsweise gleichzeitig zum Servieren fertiggekocht sind.

Durch die grundsätzliche, quasi kontinuierliche Einstellbarkeit der den Heizelementen 1 zugeführten Heizleistung werden alle die genannten Möglichkeiten durch µP- bzw. µC-Einsatz ohne weiteres möglich und es erschliessen sich dem Fachmann eine Vielzahl weiterer rechnergestützter Möglichkeiten.

Dank der Möglichkeit, die dem Heizelement zugeführte Leistung sehr fein einstellen zu können, beispielsweise durch Aenderung der Paketbreite um eine halbe Wechselspannungsperiode, ergibt sich die Möglichkeit, wesentlich mehr Einstellabstufungen vorzusehen, beispielsweise in Eingradstufen zwischen 1 und 100° mit einer Dezimalstelle. Hierzu wird die Einstellung nicht mehr an einem Drehknopf angezeigt, sondern mittels einer Digitalanzeige, wie einer Siebensegment-Anzeige. Dass eine derartige Anzeige helligkeitsreguliert ist, in Abhängigkeit des Umgebungslichtes, versteht sich von selbst.

Die anhand der Fig. 2 und 8 beschriebenen Thermofühler können im weiteren entlang der Wandung eines Kochgeschirrs vorgesehen werden, ein oder mehrere Fühler, womit eine relevante Messung des Kochgut-Temperaturzustandes für die Regelung erfolgt.

Derartige Temperaturfühler können dabei beispielsweise an einer Seitenwand einer Kochnische montiert werden und bei Bedarf, entsprechend mechanisch stabil ausgebildet, in den Bereich des Kochgeschirrs ausgeklappt werden.

Der Einsatz des Mikrocomputers ermöglicht im weiteren den momentanen Belastungszustand des Netzes zu überwachen, um selbsttätig Entscheidungen zu treffen, wie die vorgesehenen Heizelemente angesteuert werden sollen. Es kann dabei eine zeitliche Staffelung erfolgen, wann die einzelnen Heizelemente in Betrieb genommen werden, oder eine Staffelung der in der Zeit den einzelnen Heizelementen aufgeschalteten Momentanleistung, wie durch Staffelung der vorbeschriebenen Wechselspannungspakete.

Das Vorsehen eines Tastenfeldes mit Folienschaltern ergibt eine wesentlich bessere Bedienbarkeit, eine leichtere Reinigbarkeit. Da ein derartiges Tastenfeld, wie bereits beschrieben wurde, an einen beliebigen Ort, unabhängig vom eigentlichen Kochherd, angeordnet werden kann, ergibt sich die Möglichkeit, beispielsweise für Invalide, das Tastenfeld optimal zugänglich anzuordnen. Dadurch wird auch der bisher für Bedienungselemente verwendete Platz am Kochherd, z.B. für weitere Schubladen, frei. Im weiteren ermöglicht das Vorsehen eines Rechners auch den Einsatz eines Bildschirmes mit allen Möglichkeiten, die sich daraus ergeben, nämlich beispielsweise Einkaufslisten zu führen und abzurufen, Nahrungsmittellisten für entsprechende Rezepte abzuspeichern, Zusammenstellungen, welche Besucher welche Speisen bereits vorgesetzt erhielten,zu speichern, etc. Die Ausgabe von Kochprogrammen auf externen Datenträgern ermöglicht im weiteren ein höchst einfaches Austauschen von erprobten Rezepten.

**Patentansprüche**

1. Verfahren zur Steuerung der Heizleistung an mindestens einem Heizelement eines Kochherdes, deren erwünschter Wert mittels eines Vorgabeelementes eingestellt wird, dadurch gekennzeichnet, dass man mittels des Vorgabeelementes die dem Heizelement zugeführte, quasi momentane Leistung auf vorgegebene Werte stellt.

2. Verfahren nach mindestens einem der Ansprüche, wie nach Anspruch 1, dadurch gekennzeichnet, dass man an einem elektrischen Wechselsignal zum Erbringen der Heizleistung mittels des Vorgabeelementes einen Phasenanschnittwinkel einstellt.

3. Verfahren, vorzugsweise nach mindestens einem der Ansprüche, wie nach Anspruch 1, dadurch gekennzeichnet, dass man an einem elektrischen Wechselsignal zum Erbringen der Heizleistung mittels des Vorgabeelementes Wechselsignalpakete erzeugt und deren Tastverhältnis einstellt.

4. Verfahren, vorzugsweise nach mindestens einem der Ansprüche, wie nach Anspruch 3, dadurch gekennzeichnet, dass man die Pakete zeitlich von Nulldurchgang zu Nulldurchgang des Wechselstromes in ihrer Breite steuert.

5. Verfahren, vorzugsweise nach mindestens einem der Ansprüche, wie nach einem der Ansprüche 1 bis 4, dadurch gekennzeichnet, dass man das Vorgabeelement manuell und/oder nach einem Zeit/Steuer-Brogramm stellt.

6. Verfahren, vorzugsweise nach mindestens einem der Ansprüche, wie nach einem der Ansprüche 1 bis 5, dadurch gekennzeichnet, dass man die Verstellung der Heizleistung nach einem Programm in der Zeit kontinuierlich oder in Stufen vornimmt, wie nach Massgabe von kochgutspezifischen Programmen.

7. Verfahren, vorzugsweise nach mindestens einem der Ansprüche, wie nach einem der Ansprüche 5 oder 6, dadurch gekennzeichnet, dass man Programme mittels manueller Codeeingabe und/oder mittels Einlesen von Datenträgern an Ort oder mittels einer drahtlosen Uebermittlung eingibt.

8. Verfahren, vorzugsweise nach mindestens einem der Ansprüche, wie nach Anspruch 6, dadurch gekennzeichnet, dass man bei einem spezifischen Kochvorgang die Heizleistung mittels des Vorgabeelementes manuell in der Zeit verstellt und einen als optimal befundenen Leistungs/Zeit-Verlauf abspeichert, wie auf einen externen Datenträger, zur nachmaligen Benutzung als Programm.

9. Verfahren, vorzugsweise nach mindestens einem der Ansprüche, wie nach einem der Ansprüche 1 bis 8, dadurch gekennzeichnet,dass man mindestens zwei Heizelemente in gegenseitiger Abhängigkeit ansteuert.

10. Verfahren, vorzugsweise nach mindestens einem der Ansprüche, wie nach einem der Ansprüche 1 bis 9, dadurch gekennzeichnet, dass man mindestens eine Temperatur an der Strecke zwischen Heizelement und Kochgut, inklusiv als Regelgrösse misst und die Heizleistungssteuerung als Stellglied in einer Regelung einsetzt.

11. Verfahren, vorzugsweise nach mindestens einem der Ansprüche, wie nach einem der Ansprüche 1 bis 10, dadurch gekennzeichnet, dass man einen Ausfall und/oder das Abfallen des elektrischen Netzes unter einen vorgegebenen Schwellwert anzeigt.

12. Verfahren, vorzugsweise nach mindestens einem der Ansprüche, wie nach einem der Ansprüche 1 bis 11, dadurch gekennzeichnet, dass man bei Beginn eines Kochvorganges die Zeitspanne, die zum Erreichen einer unerwünschten Temperatur am Kochgut durch Anlegen einer Ueberleistung optimiert.

13. Verfahren, vorzugsweise nach mindestens einem der Ansprüche, wie nach Anspruch 10, dadurch gekennzeichnet, dass man die Schrittantwort der Regelung auf einen SOLL-Wert-Schritt mindestens einer von einer Kochgut-SOLL-Temperatur abhängigen Führungsgrösse optimiert.

14. Verfahren, vorzugsweise nach mindestens einem der Ansprüche, wie nach einem der Ansprüche 1 bis 13, dadurch gekennzeichnet, dass man bei Steuerung der Heizleistung an mehr als einem Heizelement die Steuerung selbsttätig, unter Vermeidung von netzseitigen Leistungsspitzen vornimmt.

15. Verfahren, vorzugsweise nach mindestens einem der Ansprüche, wie nach Anspruch 10, dadurch gekennzeichnet, dass man an einem Kochgeschirr an mindestens zwei Stellen eine Temperaturmessung vornimmt und die Differenz als Regelgrösse einsetzt.

16. Steuerung für die mindestens einem Kochherd-Heizelement zuzuführende Leistung, wobei ein Vorgabeelement für die gewünschte Leistung vorgesehen ist, dadurch gekennzeichnet, dass eine Einstelleinheit (13) für die quasi momentane Leistung zwischen Netz (5) und Heizelement (1) vorgesehen ist, die eingangsseitig vom Vorgabeelement (11; 39; 47; 49; 51) angesteuert wird.

17. Steuerung, vorzugsweise nach mindestens einem der Ansprüche, wie nach Anspruch 16, dadurch gekennzeichnet, dass die Einstelleinheit (13) für ein Heizelement (1) mindestens einen elektronischen Leistungsschalter (19), wie einen Leistungs-Halbleiterschalter zwischen Netz (5) und Heizelement (1) umfasst.

18. Steuerung, vorzugsweise nach mindestens einem der Ansprüche, wie nach Anspruch 17, dadurch gekennzeichnet, dass die Einstelleinheit (13) eine Zeittakteinheit (21) zur Ansteuerung des Leistungsschalters (19) umfasst, einstellbar zur Einstellung des Verhältnisses zwischen Zeiten (T - $\tau$), in welchen der Leistungsschalter (19) geschlossen ist und Zeiten ($\tau$), in welchen der Leistungsschalter geöffnet ist.

19. Steuerung, vorzugsweise nach mindestens einem der Ansprüche, wie nach einem der Ansprüche 16 bis 18, dadurch gekennzeichnet, dass die Einstelleinheit (13) eine Phasenanschnitt-Steuerung (23) umfasst.

20. Steuerung, vorzugsweise nach mindestens einem der Ansprüche, wie nach einem der Ansprüche 16 bis 18, dadurch gekennzeichnet, dass die Einstelleinheit (13) einen Impulsgenerator (27; 29; 31) mit Pulsbreiten-Verhältnis-Verstellung (29) umfasst, deren Ausgang einen Leistungsschalter zwischen Netz (5) und Heizelement (1) ansteuert.

21. Steuerung, vorzugsweise nach mindestens einem der Ansprüche, wie nach Anspruch 20, dadurch gekennzeichnet, dass der Generator (27; 29; 31) einen Impulszug mit Impulsbreiten, die einem ganzzahligen Vielfachen einer Netzhalbperiode entsprechen, abgibt und vorzugsweise mit zu Nulldurchgängen der Netz-Wechselspannung oder des Netz-Wechselstromes synchronen Schaltflanken.

22. Steuerung, vorzugsweise nach mindestens einem der Ansprüche, wie nach einem der Ansprüche 16 bis 21, dadurch gekennzeichnet, dass die Einstelleinheit eine Steuereinheit mit einem Rechner umfasst, wie mit mindestens einem Mikrocomputer.

23. Steuerung, vorzugsweise nach mindestens einem der Ansprüche, wie nach Anspruch 18, dadurch gekennzeichnet, dass die Einstelleinheit einen Programmspeicher umfasst, worin zeitliche Abläufe der anzusteuernden momentanen Leistung abgespeichert sind.

24. Steuerung, vorzugsweise nach mindestens einem der Ansprüche, wie nach einem der Ansprüche 22 oder 23, dadurch gekennzeichnet, dass an der Einstelleinheit (13) ein Programmspeicher (43) vorgesehen ist, als Lese/Schreibe-Speicher ausgebildet, zur Abspeicherung einer durchgeführten Leistungssteuerung über der Zeit und nachmaliger Wiederholung.

25. Steuerung, vorzugsweise nach mindestens einem der Ansprüche, wie nach Anspruch 24, dadurch gekennzeichnet, dass eine Ausgabeanordnung vorgesehen ist, um den Inhalt des Programmspeichers (43) auf einen externen Datenträger, wie eine Magnetkarte (45) auszugeben.

26. Steuerung, vorzugsweise nach mindestens einem der Ansprüche, wie nach einem der Ansprüche 22 bis 25, dadurch gekennzeichnet, dass eine Eingabeanordnung vorgesehen ist, mit einem EingabeTastenfeld (47) und/oder einer Leseeinrichtung für ein externes Speichermedium, wie Magnetkarten (51) und/oder mit einer drahtlosen Fernbedienungseinrichtung (49).

27. Steuerung, vorzugsweise nach mindestens einem der Ansprüche, wie nach einem der Ansprüche 22 bis 26, dadurch gekennzeichnet, dass die Eingabeanordnung eine drahtlose Uebermittlungsstrecke umfasst.

28. Steuerung, vorzugsweise nach mindestens einem der Ansprüche, wie nach einem der Ansprüche 16 bis 27, dadurch gekennzeichnet, dass eine Eingabeanordnung (39) und mindestens Teile der Einstelleinheit (13) von einem Kochherd mit dem Heizelement entfernt montierbar sind.

29. Steuerung, vorzugsweise nach mindestens einem der Ansprüche, wie nach einem der Ansprüche 16 bis 28, dadurch gekennzeichnet, dass mindestens ein Thermofühler (15) im Bereich Kochgut/Kochgeschirr/Heizelement vorgesehen ist, und dass der Einstelleinheit (13) eine Vergleichseinheit (17) zugeordnet ist, der einerseits mindestens ein SOLL-Wert-Temperaturgrössen-Signal und anderseits mindestens das Ausgangssignal des Temperaturfühlers (15) zugeführt ist, und dass der Ausgang der Vergleichseinheit (17) mit einer Regeldifferenz auf mindestens ein Stellglied (35; 33) an der Einstelleinheit (13) wirkt, zur Regelung der mit dem Fühler (15) erfassten Temperaturgrösse auf eine SOLL-Temperaturgrösse, wie eine Temperatur oder Temperaturdifferenz.

**30.** Steuerung, vorzugsweise nach mindestens einem der Ansprüche, wie nach einem der Ansprüche 16 bis 29, dadurch gekennzeichnet, dass die Einstelleinheit eine Leistungsabstufung von 0 bis 100%, mindestens in 0,1 % Schritten ansteuert.

**31.** Verfahren, vorzugsweise nach mindestens einem der Ansprüche, wie nach einem der Ansprüche 1 bis 15, dadurch gekennzeichnet, dass man die quasi momentane Leistung mit einer Bestimmungszeitspanne kleiner gleich einer halben Netzsignal-Periode steuert.

FIG. 1

FIG. 2

FIG. 3

FIG. 4

FIG. 5

FIG. 6

FIG. 7

FIG. 8